# EUROPÄISCHE PATENTANMELDUNG

(11) **EP 0 895 035 A2**
(43) Veröffentlichungstag der Anmeldung: **03.02.1999**
(21) Anmeldenummer: 98113272.3
(22) Anmeldetag: 16.07.1998
(51) Int. Cl.: F24J 2/04, E04B 1/78

(54) **Dämmsystem für Gebäudefassaden**

(30) Priorität: 30.07.1997 DE 19733075
(71) Anmelder: HERAKLITH AG, 9586 Fürnitz (AT)
(72) Erfinder: Jäger, Walter, 9300 St. Veit/Glan (AT)
(74) Vertreter: Becker, Thomas, Dr., Dipl.-Ing.

(57) **Zusammenfassung**

Dämmsystem für Gebäudefassaden aus einer ersten Dämmplatte (14), die über Abstandhalter (12) an der Gebäudefassade (10) befestigbar ist, einer zweiten Dämmplatte (20), die über Abstandhalter (18) an der ersten Dämmplatte (14) befestigbar ist, sowie einer äußeren, Wärmestrahlen absorbierenden und/oder transmittierenden Abdeckung (26), die über Abstandhalter (24) an der zweiten Dämmplatte (20) befestigbar ist, wobei die Abstandhalter (12,18,24) aus im wesentlichen horizontal verlaufenden Stegen bestehen und die Dämmplatten (14,20) zwischen den Abstandhaltern (12,18) Durchbrechungen (16,22) aufweisen.

## Beschreibung

Die Erfindung betrifft ein Dämmsystem für Gebäudefassaden.

Abnehmende Erdgas-, Erdöl- und Kohlevorkommen einerseits, ökonomische und ökologische Aspekte der Senkung des Energieverbrauchs andererseits machen es seit Jahren zu einer ständigen Aufgabe, neue und verbesserte Lösungen zur Dämmung von Gebäuden anzubieten.

Dabei steht zum einen die Dämmung als solche, zum anderen die Möglichkeit einer verbesserten Energienutzung im Vordergrund.

Zum Stand der Technik gehören sogenannte "transparente Wärmedämmsysteme". Dabei wird die Sonnenenergie erst nach Durchdringen einer mehr oder weniger strahlendurchlässigen Dämmanordnung von der Gebäudewand selbst absorbiert. Derartige Systeme sind für die Beheizung, Kühlung oder Klimatisierung von Räumen weitestgehend ungeeignet.

Der Erfindung liegt die Aufgabe zugrunde, ein Dämmsystem für Gebäudefassaden zur Verfügung zu stellen, mit dem Wärmestrahlen aus der Umgebung in vorteilhafter Weise zur Wärmedämmung von Gebäudefassaden genutzt werden können.

Dabei geht die Erfindung von der Erkenntnis aus, daß warme Luft stets aufsteigt, während kalte Luft stets nach unten sinkt.

Unter diesem Aspekt ist das erfindungsgemäße Dämmsystem so aufgebaut, daß Warmluft, die sich hinter einer äußeren Abdeckung des Dämmsystems bei entsprechender Wärmeeinstrahlung sammelt, innerhalb des im übrigen aus mehreren beabstandeten Dämmplatten aufgebauten Dämmsystems nur nach oben aufsteigen kann. Dabei erfolgt der Transport der Warmluft stufenartig von unten nach oben beziehungsweise von außen nach innen. Durch diese Zwangsführung wird umgekehrt sichergestellt, daß Kaltluft, die stets nach unten fällt, das Dämmsystem nicht von außen nach innen durchdringen kann.

In ihrer allgemeinsten Ausführungsform betrifft die Erfindung ein Dämmsystem für Gebäudefassaden mit folgenden Merkmalen:
- einer ersten Dämmplatte, die über Abstandhalter an der Gebäudefassade befestigbar ist,
- mindestens einer zweiten Dämmplatte, die über Abstandhalter an der ersten Dämmplatte befestigbar ist, sowie
- einer äußeren, Wärmestrahlen absorbierenden und/oder transmittierenden Abdeckung, die über Abstandhalter an der zweiten Dämmplatte befestigbar ist, wobei
- die Abstandhalter aus im wesentlichen horizontal verlaufenden Stegen bestehen und
- die Dämmplatten zwischen den Abstandhaltern Durchbrechungen aufweisen.

Damit ergibt sich für das Dämmsystem prinzipiell folgender Aufbau (von der Gebäudefassade nach außen betrachtet):

Benachbart der Außenfassade ist ein Hohlraum, der lediglich durch horizontal verlaufende Querstege in einzelne Teilkammern untergliedert ist.

Außenseitig liegt gegen die Stege die erste Dämmplatte mit ihren Durchbrechungen an.

Weiter nach außen folgt ein weiterer Hohlraum, der wiederum durch verschiedene, beabstandete horizontale Stege untergliedert ist.

Diesem zweiten Hohlraum folgt mindestens eine weitere Dämmplatte mit Durchbrechungen.

An diese zweite Dämmplatte schließen sich entweder weitere stegförmige Abstandhalter und eine dritte Dämmplatte an oder die zweite Dämmplatte ist über die genannten Stege mit Abstand zu einer äußeren Abdeckung angeordnet, wobei zwischen der zweiten Dämmplatte und der äußeren Abdeckung so ein dritter, untergliederter Hohlraum ausgebildet wird.

Nachfolgend wird ein Dämmsystem mit zwei Dämmplatten näher beschrieben, welches jedoch beliebig erweiterbar ist, also beispielsweise auch eine dritte oder vierte Dämmplatte in analogem Aufbau zu der ersten und zweiten Dämmplatte umfassen kann.

Alle Bauteile wirken bei dem genannten Dämmsystem funktional zusammen.

Die äußere Abdeckung hat die Aufgabe, Wärmestrahlen zu absorbieren und damit Wärme nach innen (in Richtung auf die Gebäudefassade) abzugeben beziehungsweise Wärmestrahlen in den Hohlraum dahinter durchzulassen.

Die Dämmplatten haben die Aufgabe, eine thermische Dämmung zu schaffen, die über die zwischen den Dämmplatten beziehungsweise zur Fassade hin befindlichen Hohlräume unterstützt wird.

Die Stege haben die Aufgabe, den Weg der warmen Luft nach oben zu begrenzen und so eine Zwangsführung der Warmluft sicherzustellen.

Die Durchbrechungen in den Dämmplatten dienen dazu, die Warmluft, die zwischen der Abdeckung und der äußeren Dämmplatte, zwischen benachbarten Dämmplatten beziehungsweise zwischen der Dämmplatte und der Außenfassade aufsteigt, jeweils von außen nach innen in den nächsten Hohlraum (die nächste Hohlkammer) zu leiten.

Aus diesem Aufbau folgt, daß die Stege (Abstandhalter) sich vorzugsweise über einen Großteil oder die gesamte Breite der Gebäudefassade durchgehend erstrecken, während die Durchbrechungen beispielweise vereinzelte Löcher sind, die nach einer Ausführungsform in horizontalen Reihen mit Abstand zueinander angeordnet sind.

Um den Transportweg der Warmluft zu optimieren, sieht eine Ausführungform vor, die innenseitig auf den Dämmplatten angeordneten Abstandhalter unmittelbar unterhalb der Durchbrechungen in den Dämmplatten anzuordnen.

Auf diese Weise wird zusätzlich sichergestellt, daß die Warmluft jeweils nur nach oben strömen kann.

Aus der vorgenannten Konstruktion ergibt sich auch, daß Öffnungen in benachbarten Dämmplatten höhenmäßig versetzt angeordnet werden, wie sich dies aus der nachfolgenden Figurenbeschreibung im einzelnen ergibt.

Für die Abstandhalter, die zwischen der Abdeckung und der äußeren Dämmplatte angeordnet sind, ergibt sich entsprechend eine Anordnung unmittelbar oberhalb der Durchbrechungen in der äußeren Dämmplatte.

Die äußere Abdeckung kann beispielsweise aus Glas bestehen. Auch eine auf einer dünnen Trägerplatte angeordnete Putzschicht erfüllt die Forderung nach einer Absorption beziehungsweise Durchlässigkeit von äußeren Wärmestrahlen.

Eine weitere Ausführungsform sieht vor, die Dämmplatten auf ihrer Außenseite mit einer, Wärmestrahlung absorbierenden Beschichtung auszubilden. Negativ ausgedrückt sollen die Wärmeplatten keine äußere Beschichtung aufweisen, die Wärmestrahlen reflektiert, da hierdurch der gewünschte Effekt einer kontinuierlich von unten nach oben geführten Warmluft gestört würde.

Um einen Wärmestau zu verhindern, insbesondere aber zur Regelung/Steuerung der Dämmeigenschaften des Dämmsystems, können die Räume zwischen der Abdeckung, den Dämmplatten beziehungsweise der Fassade an mindestens eine Be- und/oder Entlüftungseinrichtung angeschlossen werden.

Grundsätzlich reicht dabei eine solche Einrichtung, da alle Räume untereinander in strömungstechnischer Verbindung stehen.

Die Be-/Entlüftungseinrichtung kann im einfachsten Fall aus einem Ventil, einem Ventilator, einem Gebläse oder einem Schornstein bestehen.

Eine wirksame konstruktive Gestaltung läßt sich erreichen, wenn die Stege mit geringem Abstand vor korrespondierenden seitlichen Abdeckungen enden, wobei der oder die so gebildeten seitlichen vertikalen Züge nach Art von Kaminen gestaltet und nach außen geöffnet ausgebildet sein können.

Das beschriebene Dämmsystem läßt sich in vielfältiger Weise abwandeln, ohne den prinzipiellen Erfindungsgedanken zu verlassen. So können die Durchbrechungen beispielsweise mit Ventilklappen abgedeckt sein, die in Richtung auf die Fassade bewegbar sind. Die Luftströmung (von außen nach innen) sorgt dafür, daß sich die Ventilklappen bei entsprechender Strömungsgeschwindigkeit der Warmluft öffnen, ansonsten aber die Durchbrechungen abdecken.

Zuführleitungen in das Dämmsystem (die Hohlräume zwischen den einzelnen Dämmschichten) können dazu dienen, außerhalb des Dämmsystems erzeugte Warm- und/oder Kaltluft in das Dämmsystem einzuspeisen. So kann zum Beispiel die Abwärme von Kühlanlagen auf diese Weise ebenso eingespeist werden wie es möglich ist, überschüssige Wärme abzuziehen und einem Wärmetauscher für Brauchwasser zuzuführen.

Der Vorteil des Dämmsystems liegt in seinem äußerst einfachen Aufbau. Das Dämmsystem ist überall nachrüstbar. Es schafft im Sommer auch die Möglichkeit, Wärme von der Gebäudefassade abzuhalten, indem zum Beispiel die zwischen der Abdeckung und der äußeren Dämmschicht gesammelte Warmluft vor Weiterleitung in das Dämmsystem abgeführt wird. Werden gleichzeitig die Durchbrechungen in den Dämmplatten verschlossen, wird der Wärmetransport von außen nach innen (zur Fassade hin) weitestgehend unterbunden.

Weitere Merkmale der Erfindung ergeben sich aus den Merkmalen der Unteransprüche sowie den sonstigen Anmeldungsunterlagen.

Die Erfindung wird nachstehend anhand verschiedener Beispiele näher erläutert. Dabei zeigen - jeweils in schematisierter Darstellung -
- Figur 1:: einen Längsschnitt durch ein Dämmsystem vor einer Gebäudefassade
- Figur 2:: eine Aufsicht auf eine Dämmplatte des Dämmsystems entlang der Schnittebene A - B gemäß Figur 1
- Figur 3:: eine Teilansicht eines mit dem Dämmsystem gedämmten Gebäudes.

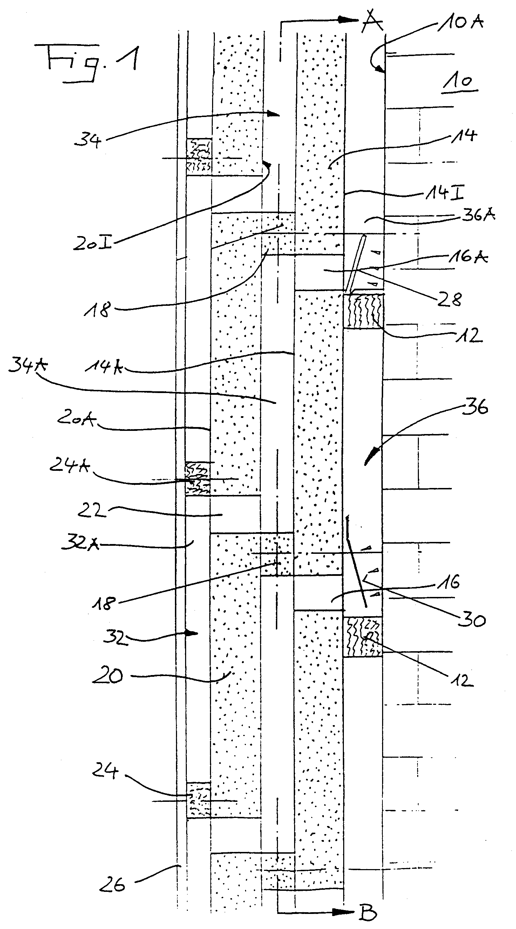

In Figur 1 beschreibt das Bezugszeichen 10 eine Gebäudefassade.

Auf der Außenfläche 10A sind mehrere horizontal verlaufende Stege aus Mineralwolle mit in etwa quadratischem Querschnitt befestigt, wobei in Figur 1 lediglich zwei Stege 12 zu erkennen sind.

Auf ihrer gegenüberliegenden Seite sind die Stege 12 an der Innenfläche 14I einer ersten Dämmplatte 14 aus Mineralwolle befestigt.

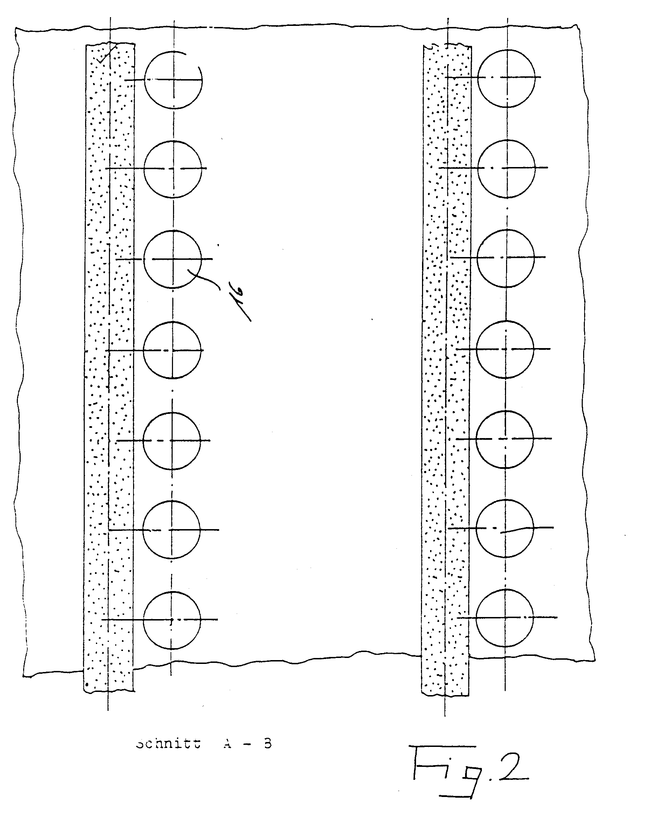

Die Dämmplatte 14 weist eine Vielzahl von Durchbrechungen 16 mit Kreisquerschnitt (Figur 2) auf. Wie Figur 2 zeigt, sind die Durchbrechungen 16 in horizontalen Reihen nebeneinander angeordnet und sie verlaufen jeweils unmittelbar oberhalb der benachbarten Stege 12.

Auf der Außenfläche 14A der Dämmplatte 14 liegen weitere Stege 18 aus Mineralwolle an, die jeweils unmittelbar oberhalb der genannten Durchbrechungen 16 und analog zu den Stegen 12 horizontal verlaufen.

Mit ihrer gegenüberliegenden Fläche sind die Stege 18 mit der Innenfläche 20I einer zweiten Dämmplatte 20 aus Mineralwolle verbunden. Die Dämmplatte 20 ist analog zur Dämmplatte 14 gestaltet. Sie weist also ebenfalls Durchbrechungen 22 auf, die analog zu den Durchbrechungen 16 in horizontalen Reihen nebeneinander angeordnet sind.

Wie insbesondere Figur 1 zeigt, sind die Durchbrechungen 22 jedoch höhenmäßig gegenüber den Durchbrechungen 16 versetzt angeordnet, so daß sie unmittelbar oberhalb der benachbarten Stege 18 verlaufen.

Gegen die Außenseite 20A der Dämmplatte 20 liegen weitere Abstandhalter 24 an, die analog zu den Abstandhaltern 12, 18 in Form horizontal verlaufender Stege aus Mineralwolle gestaltet sind und außenseitig mit einer Abdeckung 26 verbunden sind, die hier aus einer Glasscheibe besteht.

Figur 1 zeigt, daß die Dicke der Abdeckung/Glasscheibe 26 geringer ist als die Dicke der Dämmplatten 20, 14. Die werkstoffmäßige Auswahl der Dämmplatten 14, 20 beziehungsweise der Abdeckung 26 sowie ihre jeweilige Dicke richtet sich nach den lokalen Gegebenheiten und dem gewünschten Durchlässigkeitswert für Wärmestrahlen einerseits beziehungsweise Dämmwert andererseits.

Ebenfalls Figur 1 zeigt, daß die Durchbrechungen 16 innenseitig mit Ventilklappen 28, 30 abdeckbar ausgebildet sind.

Während die Ventilklappe 28 auf dem korrespondierenden Steg 12 mit einem Schenkel aufliegt, erstreckt sich der andere Schenkel vertikal nach oben und schließt die Durchbrechung 16 flächig ab, sofern nicht strömende Warmluft, wie nachstehend noch beschrieben wird, gegen die Ventilklappe 28 drückt und diese öffnet, wie in Figur 1 dargestellt.

Bei der Ventilklappe 30 ist der Aufbau umgekehrt. Sie ist "hängend" montiert und dabei mit einem ersten Schenkel an der Dämmplatte 14 befestigt, während ein gelenkig daran angeschlossener zweiter Schenkel die korrespondierende Durchbrechung abschließt beziehungsweise bei entsprechender Warmluftströmung freigibt.

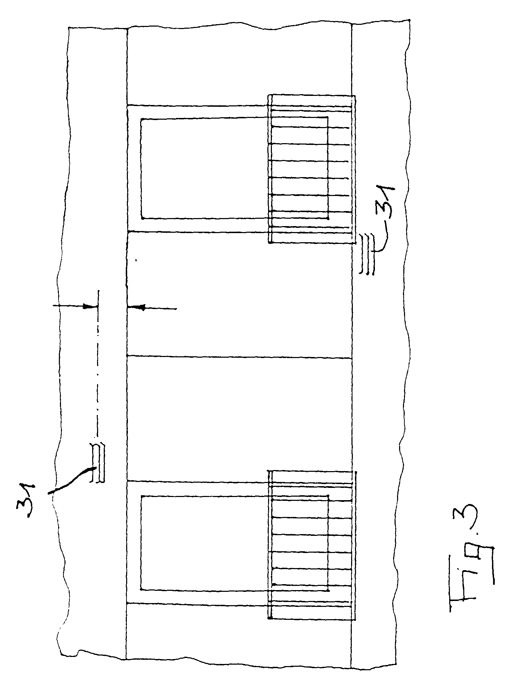

Figur 3 läßt sich entnehmen, daß das Dämmsystem schlitzartige Luftaustrittsöffnungen 31 im Bereich der Abdeckung 26 besitzt, über die überschüssige Warmluft weggeführt werden kann.

Das Dämmsystem funktioniert wie folgt:

Sonnenstrahlen durchdringen die Glasabdeckung 26 und erwärmen die Luft im Raum 32 zwischen Abdeckung 26 und äußerer Dämmplatte 20. Der Raum 32 ist dabei durch die horizontal angeordneten Stege 24 in mehrere Teilkammern untergliedert, von denen eine mit dem Bezugszeichen 32A gekennzeichnet ist.

Die so erwärmte Luft steigt innerhalb der Teilkammer 32A auf und stößt dann gegen den mit 24A gekennzeichneten Abstandhalter, so daß die Warmluft anschließend durch die mit 22A gekennzeichnete Durchbrechung in der Dämmplatte 20 strömt und von dort in eine Teilkammer 34A zwischen zwei Stegen 18 geführt wird. Dabei bildet die Teilkammer 34A einen Abschnitt innerhalb des zwischen den Dämmplatten 14, 20 ausgebildeten Raumes 34.

Sobald die Warmluft innerhalb der Teilkammer 34A gegen den oberen Steg 18A geströmt ist, wird sie durch die benachbarte Durchbrechung 16A horizontal umgelenkt, bis sie die Ventilklappe 28 in der dargestellten Form weggedrückt hat und in eine dahinter angeordnete Teilkammer 36A eines Raumes 36 zwischen der Dämmplatte 14 und der Fassade 10 strömt. Von hier aus steigt die Warmluft weiter in der Teilkammer 36A nach oben.

Aufgrund der konstruktiven Gestaltung des Dämmsystmes wird demnach die hinter der Abdeckung 26 erwärmte Luft zwangsweise kontinuierlich (von außen nach innen) nach oben geführt und sorgt letztendlich für eine zuverlässige Dämmung der Gebäudefassade 10.

Für den Fall, daß keine ausreichende Erwärmung des Raumes 32 erfolgt, hier also überwiegend Kaltluft liegt, ist der vorgenannte Strömungsweg für die Luft ausgeschlossen, da die Kaltluft über die untenliegende Entlüftung 31 nach unten weggeführt wird.

## Patentansprüche

1. Dämmsystem für Gebäudefassaden aus mindestens:
1.1 einer ersten Dämmplatte (14), die über Abstandhalter (12) an der Gebäudefassade (10) befestigbar ist,
1.2 einer zweiten Dämmplatte (20), die über Abstandhalter (18) an der ersten Dämmplatte (14) befestigbar ist, sowie
1.3 einer äußeren, Wärmestrahlen absorbierenden und/oder transmittierenden Abdeckung (26), die über Abstandhalter (24) an der zweiten Dämmplatte (20) befestigbar ist, wobei
1.4 die Abstandhalter (12, 18, 24) aus im wesentlichen horizontal verlaufenden Stegen bestehen und
1.5 die Dämmplatten (14, 20) zwischen den Abstandhaltern (12, 18) Durchbrechungen (16, 22) aufweisen.

2. Dämmsystem nach Anspruch 1, bei dem die innenseitig auf den Dämmplatten (14, 20) angeordneten Abstandhalter (12, 18) unterhalb der Durchbrechungen (16, 22) in den Dämmplatten (14, 20) verlaufen.

3. Dämmsystem nach Anspruch 1, bei dem die zwischen der Abdeckung (26) und der äußeren (zweiten) Dämmplatte (20) angeordneten Abstandhalter (24) unmittelbar oberhalb der Durchbrechungen (22) in der äußeren Dämmplatte (20) verlaufen.

4. Dämmsystem nach Anspruch 1, bei dem die Durchbrechungen (16, 22) aus Löchern bestehen, die gruppenweise in horizontalen Reihen angeordnet sind.

5. Dämmsystem nach Anspruch 1, bei dem die Abdeckung (26) aus Glas besteht.

6. Dämmsystem nach Anspruch 1, bei dem die Dämmplatten (14, 20) auf ihren Außenseiten (14A, 20A) mit einer, Wärmestrahlung absorbierenden Beschichtung ausgebildet sind.

7. Dämmsystem nach Anspruch 1, bei dem die Räume (32, 34, 36) zwischen Abdeckung (26), Dämmplatten (20, 14) und Fassade (10) an mindestens eine Be- und/oder Entlüftungseinrichtung (31) angeschlossen sind.

8. Dämmsystem nach Anspruch 7, bei dem die Be- und/oder Entlüftungseinrichtung(en) (31) am Ende der Stege (12, 18, 24) anschließen.

9. Dämmsystem nach Anspruch 1, bei dem die Durchbrechungen (16, 22) mit in Richtung auf die Fassade (10) bewegbaren Ventilklappen (28, 30) abgedeckt sind.
